# FASCICULE DE BREVET EUROPEEN

(11) **EP 1 181 124 B1**
(45) Date de publication et mention de la délivrance du brevet: **04.06.2003**
(21) Numéro de dépôt: 00925410.3
(22) Date de dépôt: 05.05.2000
(51) Int. Cl.: B23B 51/02

(54) **FORET HELICOIDAL A TROUS D'HUILE**
SPIRALBOHRER MIT KÜHLKANÄLEN
HELICAL DRILL WITH OIL HOLES

(30) Priorité: 05.05.1999 FR 9905884
(43) Date de publication de la demande: 27.02.2002
(73) Titulaire: Tivoly SA, 73790 Tours-en-Savoie (FR)
(72) Inventeur: LEMAIRE, Philippe, F-73540 La Bathie (FR)
(74) Mandataire: Bratel, Gérard
(86) Numéro de dépôt international: FR0001234
(87) Numéro de publication internationale: WO00067939

(56) Documents cités:
- EP-A- 0 818 263
- US-A- 5 273 380

## Description

La présente invention concerne un foret hélicoïdal à trous d'huile, en carbure métallique monobloc, selon le préambule de la revendication 1.

Ce foret est du genre de ceux comprenant, d'arrière en avant, une queue prévue pour son positionnement et son entraînement, un corps possédant deux lèvres de coupe hélicoïdales, diamétralement opposées par rapport à l'axe central du foret et séparés par des rainures hélicoïdales couramment appelés "goujures", et une tête ou pointe d'allure conique comportant deux arêtes de coupe.

Des forets hélicoïdaux de ce genre, destinés à la réalisation de perçages, sont décrits et illustrés par exemple dans les documents suivants :
- brevets français 2433996 et 2698809 ;
- demandes de brevets européens 0127009, 0132149 et 0642863 ;
- demandes de brevets internationales WO 8908520, WO 9413421 et WO 9513894.

Certains forets du genre ici considéré possèdent, en outre, deux trous d'huile ménagés symétriquement par rapport à l'axe central du foret, et débouchant à l'extérieur au niveau de la tête du foret; des exemples de tels forets sont indiqués dans le brevet européen 0549548, la demande de brevet internationale WO 9627469 et le brevet US 5273380 (figures 1 et 2).

Les goujures de tels forets hélicoïdaux assurent le glissement des copeaux formés lors d'une opération de perçage, en éloignant les copeaux de la région de la tête du foret. Le corps de ce foret présente, entre les fonds respectifs de ses deux goujures, une partie centrale pleine de relativement faible épaisseur, appelée "âme". L'épaisseur minimale de cette âme peut, comme l'enseigne le brevet européen 0127009 précité, représenter de 25 à 35% du diamètre extérieur du foret.

Par ailleurs, considérant la forme de la tête terminale de tels forets, aussi désignée comme "affûtage", les deux arêtes de coupe sont habituellement délimitées par l'intersection de deux faces planes ou non, désignées comme dépouille et contre-dépouille, et caractérisées par leurs angles d'inclinaison (angle de dépouille).

Toutefois, d'une manière générale, les forets hélicoïdaux actuellement disponibles sont dédiés à une application spécifique, ou du moins à une classe de matériaux à usiner assez limitée, par exemple les aciers de construction, les aciers inoxydables, ou les alliages réfractaires.

La présente invention vise à remédier à cet inconvénient, en fournissant un foret hélicoïdal de configuration optimisée, tant au niveau de sa tête que de son corps, de sorte que ce foret permet de réaliser des perçages dans des matériaux possédant des caractéristiques métallurgiques et mécaniques très variées, tout en procurant une diminution des efforts de coupe.

A cet effet, l'invention a essentiellement pour objet un foret hélicoïdal à trous d'huile, en carbure métallique monobloc, du genre indiqué en introduction, dont les deux goujures possèdent, en section selon un plan perpendiculaire à l'axe central du foret, la forme d'un arc d'ellipse dont le centre est situé sensiblement sur le contour circulaire du foret, tandis que la tête du foret comporte pour chaque arête de coupe, outre une dépouille plane et une contre-dépouille plane, une troisième face plane d'inclinaison plus prononcée que celle de la contre-dépouille, par rapport à l'axe central, la troisième face plane intersectant une portion d'une goujure et étant aussi délimitée sur un côté, vis-à-vis de la dépouille adjacente, par une arête partiellement en arc de cercle, à son point de départ tangente à l'arc d'ellipse de la goujure, et prolongée jusqu'à l'axe central du foret.

La forme ainsi obtenue permet de conserver un angle latéral de coupe positif, sur toute la longueur du bord de coupe, depuis la périphérie du foret jusqu'à son axe central, pour éviter que ne se produise dans la région de cet axe un phénomène de repoussage, au lieu d'une véritable action de coupe. De plus, elle permet de définir, en correspondance avec chaque lèvre de coupe, un troisième plan correspondant à l'amincissement de l'âme, et dont l'intersection avec le plan de la contre-dépouille est une arête rectiligne qui passe avantageusement par le centre du débouché de l'un des deux trous d'huile.

La conformation perfectionnée du foret, objet de l'invention, permet une diminution de 15% à 25% des efforts de coupe, aussi bien pour l'effort axial que pour le couple, par rapport aux forets hélicoïdaux à trous d'huile en carbure métallique disponibles jusqu'à présent sur le marché, l'amélioration pouvant varier suivant le type de matériau usiné. On obtient ainsi une diminution sensible des énergies spécifiques de coupe, donc des puissances consommées.

De plus, le foret objet de l'invention permet d'usiner, dans des conditions satisfaisantes, des matériaux possédant des caractéristiques métallurgiques et mécaniques très variées : aciers de construction non alliés ou faiblement alliés, aciers inoxydables ferritiques, martensitiques ou austénitiques, aciers réfractaires à base de nickel, etc... en maîtrisant la formation des copeaux. Ceci permet, pour l'utilisateur, de réduire le nombre de forets nécessaires, donc d'optimiser sa gestion d'outils de perçage.

On peut obtenir, en outre, une protection sur toute la longueur des lèvres de coupe principales, grâce à un rayon de courbure approprié.

Enfin, on notera que la forme du foret hélicoïdal, objet de l'invention, est facilement paramétrable et reproductible sur une machine à affûter à commande numérique.

L'invention sera de toute façon mieux comprise, et d'autres caractéristiques seront mises en évidence, à l'aide de la description qui suit, en référence au dessin schématique annexé représentant, à titre d'exemple, une forme d'exécution de ce foret hélicoïdal à trous d'huile.
Figure 1 est une vue d'ensemble, de côté, d'un foret hélicoïdal conforme à la présente invention ;
Figure 2 est une vue en bout, à échelle agrandie, du foret hélicoidal de figure 1 ;
Figure 3 est une vue de détail de la partie terminale de ce foret hélicoïdal, suivant la flèche F3 de la figure 2 ;
Figure 4 est une autre vue de détail de la partie terminale du même foret hélicoïdal, suivant la flèche F4 de la figure 2.

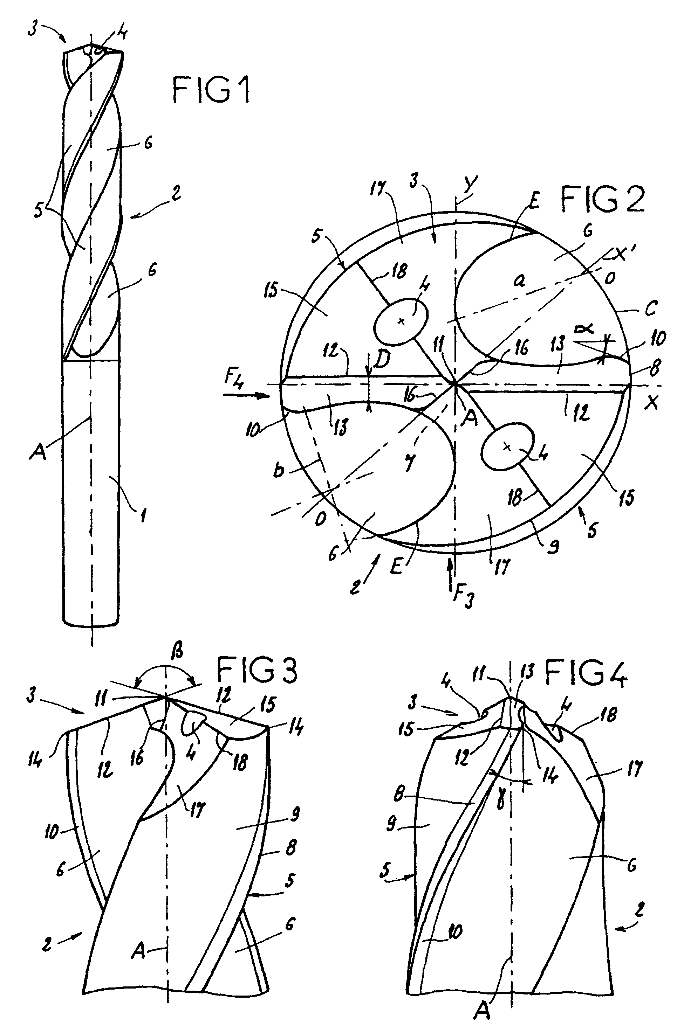

La figure 1 représente, dans son ensemble, un foret hélicoïdal à trous d'huile, en carbure métallique monobloc. Ce foret hélicoïdal se compose, d'arrière en avant : d'une queue 1 de forme cylindrique, extérieurement lisse, qui sert au positionnement et à l'entraînement du foret ; d'un corps 2 comprenant des éléments coupants hélicoïdaux ; et d'une tête 3, aussi désignée comme "affûtage", constituant l'extrémité du corps 2. Ces parties successives du foret possèdent un axe central commun A. Deux trous d'huile 4, présents dans le foret symétriquement par rapport à l'axe central A, débouchent à l'extérieur au niveau de la tête 3, comme le montre plus particulièrement la figure 2.

Le corps 2 du foret, qui sera maintenant décrit en détail en se référant aussi aux figures 3 et 4, possède deux lèvres de coupe 5 de forme hélicoïdale, diamétralement opposées, entre lesquelles sont ménagées deux rainures hélicoïdales ou "goujures" 6, formant des surfaces le long desquelles glissent les copeaux.

Dans le cas présent, la forme de chaque goujure 6 est définie, en section selon un plan perpendiculaire à l'axe central A du foret, par un arc d'ellipse E dont le centre est indiqué en O. Les deux arcs d'ellipse E, correspondant respectivement aux deux goujures 6, sont tangents à un même axe transversal Y, intersectant l'axe central A. Le centre O de chaque arc d'ellipse E est situé sensiblement à l'intersection du cercle C, représentant le contour extérieur du foret, et d'un axe X' formant un angle de 45° par rapport à l'axe transversal Y ou à l'axe transversal X (lui-même perpendiculaire à l'axe Y). Le grand axe a de chaque arc d'ellipse E forme un angle de 10° environ par rapport à l'axe X', précédemment défini. Le rapport entre les longueurs du petit axe b et du grand axe a de chaque arc d'ellipse E est compris entre 0,85 et 0,95.

Compte tenu de la géométrie des deux goujures 6, précédemment définie, l'âme 7 du corps 2 du foret, c'est-à-dire sa partie centrale pleine, située entre les fonds respectifs des deux goujures 6, possède une faible épaisseur ; le rapport entre l'épaisseur minimale de l'âme 7, et le diamètre extérieur du foret (cercle C), est d'environ 0,225.

Chaque lèvre de coupe hélicoïdale 5 possède une partie étroite dite "listel" 8, se confondant (en section transversale) avec un arc du cercle extérieur C. Le rapport entre la largeur du listel 8 et le diamètre du cercle extérieur C est environ égal à 0,075.

Au-delà du listel 8, chaque lèvre de coupe hélicoïdale 5 possède une partie dite "dégagement" 9, d'un diamètre inférieur au diamètre du cercle extérieur C.

En complément, à l'intersection de chaque arête de coupe 5 et d'une goujure 6, et plus précisément à la jonction du bord d'attaque du listel 8 et de la surface de la goujure 6 adjacente, il est prévu un cassage d'angle, comme indiqué en 10. Ce cassage d'angle peut être assimilé à une facette, formant un certain angle α (d'environ 15 à 20°) par rapport à l'axe X ; la largeur de cette facette possède, en projection sur l'axe X, une mesure dont le rapport avec le diamètre du cercle extérieur C est d'environ 0,055.

La tête ou affûtage 3, d'allure générale conique avec une pointe centrale 11, forme deux arêtes de coupe opposées 12, qui définissent un angle de pointe ou angle au sommet β. Il s'agit de l'angle compris entre les projections respectives des deux arêtes de coupe 12 sur un plan parallèle à celles-ci et contenant l'axe central A du foret. Cet angle β est ici égal à environ 145°.

Entre chaque arête de coupe 12 et le débouché de la goujure 6 correspondante, s'étend une dépouille plane 13, ce qui signifie que l'angle de dépouille est constant, depuis le bec extérieur 14 jusqu'à la pointe centrale 11 du foret. Dans le cas présent, l'angle de dépouille est de faible valeur.

De l'autre côté de chaque arête de coupe 12 est réalisée une contre-dépouille plane 15, qui possède ici une inclinaison très prononcée. L'intersection des plans de la dépouille 13 et de la contre-dépouille 15 définit la partie rectiligne de l'arête de coupe 12, parallèle à l'axe X, qui se situe à une certaine distance D de la tangente à l'arc d'ellipse E qui est parallèle au même axe X (les éléments précités étant considérés en projection dans un plan perpendiculaire à l'axe central A).

La géométrie précédemment décrite permet de définir, en outre, un angle latéral de coupe γ, qui correspond à l'angle compris entre la ligne droite parallèle à l'axe central A du foret passant par un point considéré de l'arête de coupe 12, et la tangente au profil de la goujure 6 dans le plan de mesure de cet angle (plan parallèle à l'axe A). Au niveau des becs 14 du foret, l'angle latéral de coupe γ ainsi défini est égal à l'angle d'hélice des lèvres de coupe 5 du corps 2 du foret, ici compris entre 30° et 35° - voir figure 4. Par contre, cet angle γ décroît rapidement, s'annule puis devient négatif, lorsqu'on se rapproche de la pointe centrale 11 du foret, ce qui a pour conséquence, quant le foret est utilisé, d'être confronté au niveau de la pointe 11 à un phénomène de repoussage, et non pas à une action de coupe.

Ce phénomène est évité par les dispositions complémentaires suivantes :

Symétriquement par rapport à l'axe central A du foret, sont formées deux arêtes 16 définies comme suit (en projection dans un plan perpendiculaire à l'axe A - voir figure 2) :

Deux cercles, symétriques par rapport à l'axe central A, sont tangents chacun à l'un des axes d'ellipse E et à l'axe Y, lui-même tangent à ces arcs d'ellipse E. Des arcs respectifs de ces cercles sont raccordés par leur tangente commune, passant par l'axe central A.

Cette forme permet de limiter les plans de la dépouille 13 et de la contre-dépouille 15, et de délimiter une troisième face plane 17, fortement inclinée par rapport à l'axe central A, la face plane 17 partant de la région de l'âme amincie 7 et se prolongeant, en s'élargissant, vers la périphérie du foret, où elle se raccorde à l'extrémité du dégagement 9 correspondant.

L'intersection de chaque troisième face plane 17 avec la contre-dépouille plane 15 correspondante est une arête rectiligne 18, d'orientation sensiblement radiale (en projection dans un plan perpendiculaire à l'axe A), qui passe par le centre du débouché de l'un des trous d'huile 4.

Grâce à la forme précédemment définie, un angle latéral de coupe positif est conservé, depuis chaque bec 14 jusqu'à la pointe centrale 11 du foret.

Bien entendu, les divers rapports dimensionnels peuvent s'écarter plus ou moins des valeurs indiquées dans la précédente description.

## Revendications

1. Foret hélicoïdal à trous d'huile, en carbure métallique monobloc, comprenant, d'arrière en avant, une queue (1) prévue pour son positionnement et son entraînement, un corps (2) possédant deux lèvres de coupe hélicoïdales (5), diamétralement opposées par rapport à l'axe central (A) du foret et séparées par des rainures hélicoïdales ou goujures (6), et une tête ou pointe (3) d'allure conique comportant deux arêtes de coupe (12), le foret possédant deux trous d'huile (4) ménagés symétriquement par rapport à son axe central (A) et débouchant à l'extérieur au niveau de la tête (3) du foret, **caractérisé en ce que** les deux goujures (6) possèdent, en section selon un plan perpendiculaire à l'axe central (A) du foret, la forme d'un arc d'ellipse (E) dont le centre (0) est situé sensiblement sur le contour circulaire (C) du foret, tandis que la tête (3) du foret comporte pour chaque arête de coupe (12), outre une dépouille plane (13) et une contre-dépouille plane (15), une troisième face plane (17) d'inclinaison plus prononcée que celle de la contre-dépouille (15), par rapport à l'axe central (A), la troisième face plane (17) intersectant une portion d'une goujure (6) et étant aussi délimitée sur un côté, vis-à-vis de la dépouille (13) adjacente, par une arête (16) partiellement en arc de cercle, à son point de départ tangente à l'arc d'ellipse (E) de la goujure (6), et prolongée jusqu'à l'axe central (A) du foret.

2. Foret hélicoïdal selon la revendication 1, **caractérisé en ce que** l'intersection de la troisième face plane (17) avec la contre-dépouille (15) est une arête rectiligne (18) qui passe par le centre du débouché de l'un des deux trous d'huile (4).

3. Foret hélicoïdal selon la revendication 1 ou 2, **caractérisé en ce que** les deux arcs d'ellipse (E), correspondant respectivement au deux goujures (6), sont tangents à un même axe transversal (Y), intersectant l'axe central (A) du foret, et **en ce que** le centre (0) de chaque arc d'ellipse (E) est situé sensiblement à l'intersection du contour extérieur (C) du foret et d'un axe (X') formant un angle de 45° par rapport à l'axe transversal (Y).

4. Foret hélicoïdal selon la revendication 3, **caractérisé en ce que** le grand axe (a) de chaque arc d'ellipse (E), correspondant à une goujure (6), forme un angle de 10° environ par rapport à l'axe (X').

5. Foret hélicoïdal selon la revendication 3 ou 4, **caractérisé en ce que** le rapport entre les longueurs du petit axe (b) et du grand axe (a) de chaque arc d'ellipse (E), correspondant à une goujure (6), est compris entre 0,85 et 0,95.

6. Foret hélicoïdal selon l'une quelconque des revendications 1 à 5, **caractérisé en ce que** le rapport entre l'épaisseur minimale de l'âme (7) de son corps, située entre les fonds respectifs des deux goujures (6), et le diamètre extérieur du foret (cercle C), est d'environ 0,225.

7. Foret hélicoïdal selon l'une quelconque des revendications 1 à 6, **caractérisé en ce que** chaque lèvre de coupe hélicoïdale (5) possède un listel (8) se confondant en section avec un arc du cercle extérieur (C), et prolongé par un dégagement (9) d'un diamètre inférieur au diamètre du cercle extérieur (C), le rapport entre la largeur du listel (8) et le diamètre du cercle extérieur (C) étant environ égal à 0,075.

8. Foret hélicoïdal selon la revendication 7, **caractérisé en ce qu'**à la jonction du bord d'attaque du listel (8) et de la surface de la goujure (6) adjacente, il est prévu un cassage d'angle (10).

9. Foret hélicoïdal selon la revendication 8, **caractérisé en ce que** ledit cassage d'angle se présente comme une facette (10) dont la largeur possède, en projection sur un axe (X) perpendiculaire à l'axe (Y) auquel sont tangents les arcs d'ellipse (E), une mesure dont le rapport avec le diamètre du cercle extérieur (C) est d'environ 0,055.

10. Foret hélicoïdal selon l'une quelconque des revendications 1 à 9, **caractérisé en ce qu'**au niveau de la tête (3) du foret, les arêtes (16) sont définies, en projection dans un plan perpendiculaire à l'axe central (A) du foret, par deux cercles symétriques par rapport à cet axe central (A), et tangents chacun à l'un des arcs d'ellipse (E) et à l'axe (Y) lui-même tangent à ces arcs d'ellipse (E), les arcs respectifs de ces cercles étant raccordés par leur tangente commune, passant par l'axe central (A).

## Patentansprüche

1. Spiralbohrer aus Einblock-Metallkarbid mit Öl-Löchern, der, von hinten nach vorn gesehen, umfasst: ein Endstück (1), das zur Positionierung und zum Antrieb vorgesehen ist, einen Schaft (2) mit zwei spiralförmigen Schneidlippen (5), die sich, bezogen auf die Zentralachse (A) des Bohrers, diametral gegenüberliegen und durch spiralförmige Rillen oder Span-Nuten (6) getrennt sind, und einen konisch zulaufenden Kopf oder eine konisch zulaufende Spitze (3), der oder die zwei Schneidkanten (12) aufweist, wobei der Bohrer zwei Öl-Löcher (4) besitzt, die, bezogen auf die Zentralachse (A), symmetrisch angeordnet sind und im Bereich des Bohrerkopfes (3) nach außen münden, **dadurch gekennzeichnet, dass** die zwei Span-Nuten (6), im Schnitt entlang einer zur Zentralachse (A) des Bohrers senkrechten Ebene die Form eines flachen Ellipsenbogens (E) besitzen, dessen Mittelpunkt (O) sich praktisch auf der kreisförmigen Außenkontur (C) des Bohrers befindet, während der Kopf (3) des Bohrers für jede Schneidkante (12), außer einer ebenen Hinterschliff-Fläche (13) und einer ebenen Gegen-Hinterschliff-Fläche (15), eine dritte ebene Fläche (17) umfasst, deren Schrägstellung bezogen auf die Zentralachse (A) deutlicher ist als diejenige der Gegen-Hinterschliff-Fläche (15), wobei die dritte ebene Fläche (17) einen Teil einer Span-Nut schneidet, und auch auf einer Seite, gegenüber der benachbarten Hinterschliff-Fläche (13), begrenzt ist von einer teilweise kreisbogenförmigen Kante (16), und an ihrem Ausgangspunkt den Ellipsenbogen (E) der Span-Nut (6) tangiert und bis zur Zentralachse (A) des Bohrers verlängert ist.

2. Spiralbohrer nach Anspruch 1, **dadurch gekennzeichnet, dass** die Verschneidung der dritten ebenen Fläche (17) mit der Gegen-Hinterschliff-Fläche (15) eine geradlinige Kante (18) ist, die durch den Mittelpunkt des Abflusses des einen der zwei Öl-Löcher (4) verläuft.

3. Spiralbohrer nach Anspruch 1 oder 2, **dadurch gekennzeichnet, dass** die zwei Ellipsenbögen (E), die jeweils den zwei Span-Nuten (6) entsprechen, dieselbe Querachse (Y) tangieren, die die Zentralachse (A) des Bohrers durchschneidet, und dadurch, dass der Mittelpunkt (O) jedes Ellipsenbogens (E) praktisch am Schnittpunkt der Außenkontur (C) des Bohrers mit einer Achse (X') liegt, die bezogen auf die Querachse (Y) einen Winkel von 45° bildet.

4. Spiralbohrer nach Anspruch 3, **dadurch gekennzeichnet, dass** die grosse Achse (a) jedes Ellipsenbogens (E), der einer Span-Nut (6) entspricht, einen Winkel von etwa 10° bezogen auf die Achse (X') bildet.

5. Spiralbohrer nach Anspruch 3 oder 4, **dadurch gekennzeichnet, dass** das Verhältnis zwischen der Länge der kleinen Achse (b) und der Länge der großen Achse (a) jedes Ellipsenbogens (E), der einer Span-Nut (6) entspricht, zwischen 0,85 und 0,95 liegt.

6. Spiralbohrer nach einem der Ansprüche 1 bis 5, **dadurch gekennzeichnet, dass** das Verhältnis zwischen der minimalen Dicke des Schaftkerns (7), der zwischen dem jeweiligen Grund der zwei Span-Nuten (6) liegt, und dem Außendurchmesser des Bohrers (Kreis C) ungefähr 0,225 beträgt.

7. Spiralbohrer nach einem der Ansprüche 1 bis 6, **dadurch gekennzeichnet, dass** jede spiralfömige Schneidlippe (5) eine Führungsfase (8) besitzt, die im Schnitt mit einem Bogen des Außenkreises (C) zusammenfällt und verlängert ist durch einen Hinterschnitt (9) mit einem Durchmesser, der kleiner ist als der Durchmesser des Außenkreises (C), wobei das Verhältnis zwischen der Breite der Führungsfase (8) und dem Durchmesser des Außenkreises (C) etwa gleich 0,075 ist.

8. Spiralbohrer nach Anspruch 7, **dadurch gekennzeichnet, dass** an der Stoßstelle der Kanten der Führungsfase (8) und der Oberfläche der angrenzenden Span-Nut (6) ein Kantenbrech-Winkel (10) vorgesehen ist.

9. Spiralbohrer nach Anspruch 8, **dadurch gekennzeichnet, dass** dieser Winkel der Kantenbrechung sich wie eine Facette (10) darstellt, deren Breite, in Projektion auf eine Achse (X), die senkrecht auf der Achse (Y) steht, zu der die Ellipsenbögen (E) Tangenten sind, ein Maß besitzt, dessen Verhältnis zum Durchmesser des Außenkreises (C) etwa 0,055 beträgt.

10. Spiralbohrer nach einem der Ansprüche 1 bis 9, **dadurch gekennzeichnet, dass** im Bereich des Kopfes (3) des Bohrers die Kanten (16), projiziert auf eine Ebene, die zur Zentralachse (A) des Bohrers senkrecht steht, bestimmt werden durch zwei, bezogen auf diese Zentralachse (A) symmetrische Kreise, wobei jeder Kreis einen der Ellipsenbögen (E) und die Achse (Y) tangiert, die ihrerseits diese Ellipsenbögen (E) tangiert, wobei die jeweiligen Bögen dieser Kreise durch ihre gemeinsame, durch die Zentralachse (A) verlaufende, Tangente verbunden sind.

## Claims

1. Helical drill with oil holes, single-cast from metal carbide, comprising, from the back to the front, a shank (1) provided to position and drive it, a body (2) with two helical cutting lips (5), diametrically opposite relative to the center axis (A) of the drill and separated by helical grooves or flutes (6), and a tapered head or tip (3) with two cutting edges (12), the drill having two oil holes (4) provided symmetrically with respect to its center axis (A) and emerging outside at head (3) of the drill, **characterized in that** the two flutes (6) have, in section along a plane perpendicular to center axis (A) of the drill, the shape of an elliptical arc E whose center O is located substantially at the circular contour (C) of the drill, while head (3) of the drill has, for each cutting edge (12), in addition to a planar draft (13) and planar back draft (15), a third planar face (17) with a more pronounced inclination than that of the back draft (15), relative to center axis (A), the third planar face (17) intersecting a portion of a flute (6) and also being delimited on one side, relative to the adjacent draft (13), by an edge (16) partially shaped as the arc of a circle, at its starting point tangential to elliptical arc (E) of flute (6), and extended up to the center axis (A) of the drill.

2. Helical drill according to Claim 1, **characterized in that** the intersection of the third planar face (17) with back draft (15) is a rectilinear edge (18) which passes through the center of the point where one of the two oil holes (4) emerge.

3. Helical drill according to Claim 1 or 2, **characterized in that** the two elliptical arcs (3) corresponding respectively to the two flutes (6) are tangential to the same transverse axis (Y) intersecting the center axis (A) of the drill, and **in that** the center (0) of each elliptical arc (E) is located substantially at the intersection of the outer contour (C) of the drill and of an axis (X') forming an angle of 45° to the transverse axis (Y).

4. Helical drill according to Claim 3, **characterized in that** the major axis (a) of each elliptical arc (E), corresponding to a flute (6), forms an angle of approximately 10° to axis (X').

5. Helical drill according to Claim 3 or 4, **characterized in that** the ratio between the lengths of the minor axis (b) and major axis (a) of each elliptical arc (E) corresponding to a flute (6) is between 0.85 and 0.95.

6. Helical drill according to any one of Claims 1 to 5, **characterized in that** the ratio between the minimum thickness of core (7) of its body, located between the respective bottoms of the two flutes (6) and the outside diameter of the drill (circle C) is approximately 0.225.

7. Helical drill according to any one of Claims 1 to 6, **characterized in that** each helical cutting lip (5) has a listel (8) equated in section with an arc of outer circle (C), and extended by a land (9) with a diameter less than the diameter of outer circle (C), the ratio between the width of listel (8) and the diameter of outer circle (C) being approximately equal to 0.075.

8. Helical drill according to Claim 7, **characterized in that**, between the junction of the leading edge of listel (8) and the surface of the adjacent flute (6), an angle break (10) is provided.

9. Helical drill according to Claim 8, **characterized in that** said angle break presents as a facet (10) whose width, in projection on an axis (X) perpendicular to axis (Y) to which elliptical arcs (E) are tangential, has a ratio to the diameter of outer circle (C) of approximately 0.055.

10. Helical drill according to any one of Claims 1 to 9, **characterized in that**, at head (3) of the drill, edges (16) are defined, in projection in a plane perpendicular to the center axis (A) of the drill, by two circles symmetrical with respect to this center axis (A), and each tangential to one of the elliptical arcs (E) and to axis (Y), itself tangential to these elliptical arcs (E), the respective arcs of these circles being connected by their common tangent, passing through center axis (A).
